Europäisches Patentamt

European Patent Office

Office européen des brevets

(19)

(11) Veröffentlichungsnummer: **0 269 971 B1**

(12) **EUROPÄISCHE PATENTSCHRIFT**

(45) Veröffentlichungstag der Patentschrift: **28.08.91**

(21) Anmeldenummer: **87117261.5**

(22) Anmeldetag: **24.11.87**

(51) Int. Cl.⁵: **B60K 17/30, B60B 35/12**

(54) **Aufhängung eines lenkbaren Rades.**

(30) Priorität: **29.11.86 DE 3640931**

(43) Veröffentlichungstag der Anmeldung:
**08.06.88 Patentblatt 88/23**

(45) Bekanntmachung des Hinweises auf die
Patenterteilung:
**28.08.91 Patentblatt 91/35**

(84) Benannte Vertragsstaaten:
**AT BE CH DE ES FR GB IT LI**

(56) Entgegenhaltungen:
**EP-A- 0 113 062**
**DE-C- 3 641 022**
**FR-A- 2 122 066**
**GB-A- 534 227**
**US-A- 2 417 316**

(73) Patentinhaber: **DEERE & COMPANY**
**1 John Deere Road**
**Moline, Illinois 61265(US)**

(72) Erfinder: **Hückler, Volker**
**Rossittenstrasse 11**
**W-7760 Radolfzell(DE)**
Erfinder: **Eckhardt, Ulrich**
**Goethestrasse 1**
**W-6701 Altrip(DE)**

(74) Vertreter: **Feldmann, Bernhard et al**
**DEERE & COMPANY European Office, Patent**
**Department Steubenstrasse 36-42 Postfach**
**503**
**W-6800 Mannheim 1(DE)**

**Beschreibung**

Die Erfindung betrifft eine Aufhängung für ein lenkbares antreibbares Rad an einem Achskörper, insbesondere für ein an einer Vorderachse eines Ackerschleppers angeordnetes Rad.

Die US-A-4,482,025 offenbart eine Aufhängung eines angetriebenen Rades, wobei durch die Lageranordnung, die Ausbildung eines Untersetzungsgetriebes und die Einhaltung eines bestimmten negativen Lenkrollradius' ein möglichst großer Lenkeinschlag ermöglicht werden soll. Die hinsichtlich dieser Aufhängung und Ausbildung des Untersetzungsgetriebes einzuhaltenden geometrischen Bedingungen sind sehr kompliziert und schwer einzustellen. Zudem ist der mögliche Lenkwinkel noch zu gering.

Aus dem aus der Anfangszeit der Ackerschlepperentwicklung stammenden Prospekt: "Der Allzweck-Bulldog, LANZ 20 PS, 25 PS" geht eine Aufhängung eines lenkbaren, jedoch nicht angetriebenen Rades an einem Achskörper eines Ackerschleppers mit einem Nachlaufwinkel und einem horizontalen Versatz der Schwenkachse zu der Raddrehachse hervor. Aus der Vorderansicht des in dem Prospekt abgebildeten Ackerschleppers ist ersichtlich, daß die innere Kante des Rades weiter als der Rad-Radius von dem Ackerschlepperrumpf entfernt ist, so daß der Lenkwinkel durch diese Aufhängung nicht zusätzlich vergrößert worden ist.

Die GB-A-534,227 zeigt eine Aufhängung eines Rades eines schnellfahrenden Automobils, das nicht starr, sondern über Lenker höhenbeweglich an einem Träger angreift. Die Schwenkachse des Rades verläuft je nach der gegebenen Belastung mehr oder weniger geneigt zu der Vertikalen und um ein bestimmtes Maß nach hinten versetzt. Gemäß Seite 3, Zeilen 15 ff dient der horizontale Versatz der Schwenkachse der Herabsetzung der Lenkkräfte; eine Vergrößerung des Lenkwinkels ist nicht angesprochen.

Bei einer bekannten Aufhängung (FR-A-2 122 066) eines antreibbaren Rades eines Ackerschleppers ist die Schwenkachse eines Nabengehäuses des Rades mit Bezug auf die Drehachse des Rades in der Vorwärtsfahrtrichtung des Ackerschleppers gesehen nach hinten versetzt und verläuft senkrecht zu der Aufstandsebene des Ackerschleppers. Es ergibt sich somit der Vorteil, daß der Abstand von der Schwenkachse zum rückwärtigen Ende des Rades geringer ist als der zu dessen vorderen Ende. Da normalerweise bei Ackerschleppern die Begrenzung des Lenkwinkels aber durch das Anschlagen der rückwärtigen inneren Kante des kurveninneren Rades am Rumpf des Ackerschleppers bestimmt wird, ergibt sich durch diese bekannte Aufhängung ein größerer Lenkwinkel als bei herkömmlichen Ackerschleppern.

Der Antrieb der Räder nach diesem Dokument erfolgt über zwei Winkelgetriebe mit einer zweifachen Umlenkung, wobei eine zwischen beiden Winkelgetrieben verlaufende Ritzelwelle konzentrisch zu der Schwenkachse angeordnet ist. Die Verwendung zweier Winkelgetriebe ist sehr aufwendig. Darüber hinaus nimmt der Flansch 4, der an den Körper des Ackerschleppers scheinbar direkt angeschraubt ist, eine sehr tiefliegende Stellung ein, die zu einem geringen Bodenfreiraum führt.

Die der Erfindung zugrunde liegende Aufgabe wird nach alledem darin gesehen, eine Aufhängung für ein angetriebenes und gegenüber einem Achskörper schwenkbares Rad vorzuschlagen, die bei einem geringen Aufwand für den Antrieb einen großen Lenkwinkel und einen großen Bodenfreiraum ermöglicht.

Diese Aufgabe ist erfindungsgemäß durch die Lehre des Patentanspruchs 1 gelöst worden.

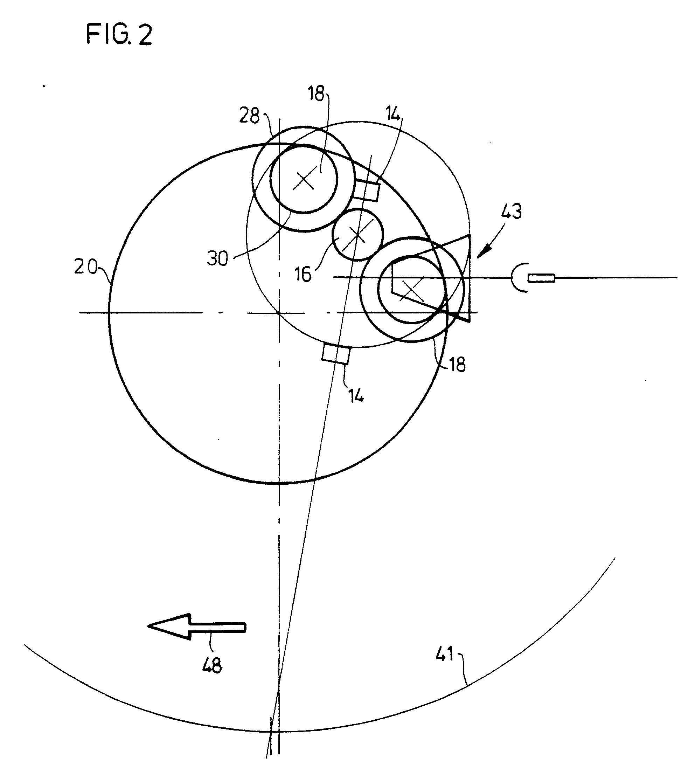

Die Verwendung eines direkten und exzentrisch zu der Raddrehachse verlaufenden Durchtriebs führt selbst bei dem horizontalen Versatz zu einem Anschluß des Antriebs in einem wesentlich oberhalb der Raddrehachse liegenden Quadranten, sh. Figur 2, und somit zu einem großen Bodenfreiraum.

Der Nachlaufwinkel bringt einen weiteren Versatz des tatsächlichen Drehpunkts des Rades zugunsten eines geringeren Wenderadius'.

Der Antrieb des Rades erfolgt ohne Umlenkung in eine andere Drehebene und somit mit einem guten Wirkungsgrad bei gedrungener Bauweise.

Auf diese Weise liegt der Drehpunkt des Rades beim Lenken stets entweder senkrecht unterhalb der Drehachse des Rades oder geringfügig zu dieser in Vorwärtsfahrtrichtung gesehen nach vorne versetzt, so daß die Lenkkräfte so gering wie möglich gehalten sind. Außerdem trägt der positive Nachlauf zu einem stabilen und nicht flatternden Abrollen der Räder bei.

Das angetriebene Rad zieht bei einem entsprechenden Nachlaufwinkel oder bei einer variablen und vom Lenkwinkel abhängigen Antriebsdrehzahl das Kraftfahrzeug, und insbesondere den Ackerschlepper, zusätzlich in die Kurve.

Die Aufhängung, die wie bei der bekannten Ausführung zwischen den Lageraugen und auf der Schwenkachse gelegen eine Öffnung für den Antrieb des Rades enthält, kann in ihren Abmessungen relativ klein gehalten werden, wenn die Antriebswelle mit einem geringen Antriebsdrehmoment belastet ist und somit geringe Außenabmessungen aufweist, wie es nach der Lehre gemäß Patentanspruch 2 möglich ist.

In der Zeichnung ist ein nachfolgend näher beschriebenes Ausführungsbeispiel der Erfindung dargestellt. Es zeigt:

Figur 1     ein Getriebe eines erfindungsgemäß aufgehängten lenkbaren Rades in schematischer Darstellung und in Seitenansicht und

Figur 2 das Getriebe und die Anordnung der Aufhängung in Vorderansicht, ebenfalls in schematischer Darstellung.

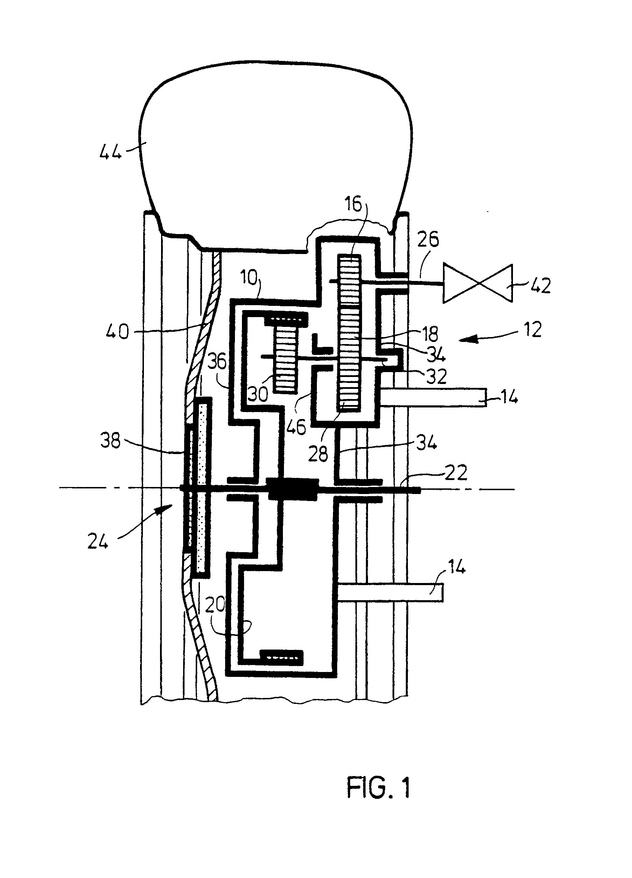

Aus Figur 1 geht ein Gehäuse 10 hervor, das der Aufnahme eines Getriebes 12 dient und mittels Lageraugen 14 an ein Ende eines nicht dargestellten Achskörpers, insbesondere einer Vorderachse eines Ackerschleppers, angeschlossen wird. In die Lageraugen 14 sind nicht ersichtliche Lagerbohrungen eingebracht, die der Aufnahme eines ebenfalls nicht gezeigten und einenends von dem Achskörper aufgenommenen Achsschenkelbolzens dienen und um diesen mit dem Gehäuse 10 im wesentlichen horizontal schwenkbar sind.

In dem Gehäuse 10 sind ein Eingangsrad 16, zwei zweistufige Zwischenräder 18, ein Hohlrad 20 und ein Schaft 22 einer Radnabe 24 vorgesehen. Zudem erstreckt sich in das Gehäuse 10 an dessen oberen Endbereich eine Antriebswelle 26.

Das Eingangsrad 16 ist drehfest auf dem in das Gehäuse 10 hineinragenden Endbereich der Antriebswelle 26 gehalten.

Die Zwischenräder 18 sind zweistufig ausgebildet und weisen als erste Stufe 28 ein Zahnrad mit einem größeren Außendurchmesser auf, während eine zweite Stufe 30 von einem Zahnrad mit einem kleineren Außendurchmesser gebildet wird. Die Zahnräder beider Stufen 28 und 30 sind drehfest miteinander verbunden und gemeinsam auf einer Welle 32 gelagert.

Das Hohlrad 20 hat die Form einer Glocke, deren Glockenboden zentrisch mit dem Schaft 22 der Radnabe 24 verbunden ist. Hierzu ist es aus Montagegründen zweckmäßig, eine Außenverzahnung auf dem Schaft 22 und eine Innenverzahnung in dem Glockenboden anzubringen, was jedoch in der Zeichnung nicht dargestellt ist.

Der Schaft 22 erstreckt sich durch sich gegenüberliegende und annähernd vertikal verlaufende Wandungen 34 und 36 des Gehäuses 10 und ist in diesen mittels nicht dargestellter Kegelrollenlager drehbar gelagert. Das in der Zeichnung links aus dem Gehäuse 10 herausragende Endstück des Schaftes 22 trägt einen Flansch 38 der Radnabe 24, an den eine Felge 40 angeschraubt wird. Es ist somit ersichtlich, daß eine sich drehende Radnabe 24 gleichzeitig die Felge 40 und ein sie aufnehmendes Rad 44 in Drehung versetzt.

Die Antriebswelle 26 erstreckt sich über ein Universalgelenk 42 von einem Durchtrieb 43 in der Form eines angedeuteten Differentialgetriebes aus in das Gehäuse 10 und nimmt dort axial und tangential fest das Eingangsrad 16 auf. Das das Eingangsrad 16 tragende Endstück der Antriebswelle 26 ist vorzugsweise fliegend in dem Gehäuse 10 gelagert und ermöglicht so einen Lastausgleich zwischen dem Eingangsrad 16 und den Zwischenrädern 18 bzw. deren ersten Stufe 28.

Die Zwischenräder 18 werden jeweils von der Welle 32 getragen, die einenends in der Wandung 34 und mittig in einem Steg 46 gelagert ist, wobei sich zwischen dem Steg 46 und der Wandung 34 das Zahnrad der ersten Stufe 28 und zwischen dem Steg 46 und der Wandung 36 das Zahnrad der zweiten Stufe 30 mit der Welle 32 freitragend erstreckt.

Zur Beschreibung des Leistungsflusses wird im folgenden ergänzend auf das in Figur 2 Gezeigte verwiesen.

Man erkennt dort, daß die Außenverzahnung des Eingangsrades 16 mit der Außenverzahnung der ersten Stufe 28 der Zwischenräder 18 kämmt. Je nach der Größe und der Richtung der zwischen dem Eingangsrad 16 und der ersten Stufe 28 angreifenden Kraft wird das Eingangsrad 16 radial geringfügig ausweichen, um somit einen Lastausgleich zu schaffen. Ferner ist Figur 2 zu entnehmen, daß die Außenverzahnung der zweiten und mit einem kleineren Außendurchmesser versehenen Stufe 30 mit der Innenverzahnung des Hohlrades 20 kämmt. Nachdem die erste und die zweite Stufe 28 und 30 drehfest miteinander verbunden sind, wird eine über das Eingangsrad 16 eingeleitete Drehbewegung über die beiden Zwischenräder 18 auf das Hohlrad 20 und von dort aus auf die Radnabe 24 und das Rad 44 übertragen. Wenn hier auch zwei Zwischenräder 18 dargestellt sind, so ist es dennoch denkbar, bei entsprechenden Kraftverhältnissen nur ein Zwischenrad 18 vorzusehen.

Die tatsächliche Anordung des Eingangsrades 16 und der Zwischenräder 18 entspricht der in Figur 2 dargestellten, wohingegen bei der in Figur 1 dargestellten Anordung das Eingangsrad 16 der Übersichtlichkeit wegen nach oben versetzt dargestellt ist. Man kann zudem in Figur 2 erkennen, daß das Eingangsrad 16 auf einer Linie liegt, die ausgehend von dem Drehpunkt des Rades 44 zu der Horizontalen einen Winkel von ca. 45 Grad einschließt, und zwar in dem ersten Quadranten mit Blick auf die Zeichnung, wenn man vom höchsten Punkt des Rades 44 oder des Hohlrades 20 ausgeht und im Uhrzeigerdrehsinn fortschreitet. Ein mit 48 bezeichneter Pfeil zeigt die Vorwärtsfahrtrichtung des mit dem Rad 44 versehenen Kraftfahrzeuges an.

Aus Figur 2 geht außerdem deutlich die Anordnung der erfinderischen Aufhängung hervor, deren durch die Lageraugen 14 verlaufende Schwenkachse einen Winkel zwischen ca. 10 und 15 Grad zu der Vertikalen einschließt. Diese Schwenkachse trifft aufgrund ihrer Neigung jedoch vor, d. h. mit Blick auf Figur 2 links neben dem theoretischen Aufstandspunkt des Rades 44 auf der Aufstandsebene auf, so daß sich eine Aufhängung mit einem positiven Nachlauf ergibt, der für ein stabiles Nachrollverhalten des Rades 44 sorgt. Es ist deutlich zu erkennen, daß die Strecke zwischen der Schwenkachse an jedem beliebigen Punkt zwischen den beiden Lageraugen 14 und dem in Figur 2 rechts gelegenen und rückwärtigen Ende des Rades 44 kürzer ist als die Strecke zwischen der Schwenkachse und dem vorderen und in Figur 2 links gelegenen Ende des Rades 44, so daß das Rad 44 weiter um die Schwenkachse geschwenkt werden kann, bevor es an dem Rumpf des Kraftfahrzeuges anschlägt.

Das Gehäuse 10 kann aufgrund der wenigen Komponenten des Getriebes 12 und deren raumsparender Anordnung innerhalb der Felgenschüssel der Felge 40 untergebracht werden.

**Patentansprüche**

1. Aufhängung für ein lenkbares antreibbares Rad (44) an einem Achskörper, insbesondere für ein an einer Vorderachse eines Ackerschleppers angeordnetes Rad, wobei

   a) das Rad (44) von einem Gehäuse (10) drehbar aufgenommen ist,

   b) zum Antrieb des Rades (44) eine Antriebswelle (26), ein exzentrisch zu der Drehachse des Rades (44) gelagertes Eingangsrad (16) und ein Durchtrieb (43) derart angeordnet sind, daß die Antriebswelle (26) eine direkte und ebenfalls exzentrisch zu der Drehachse des Rades (44) verlaufende Antriebsverbindung zwischen dem Durchtrieb (43) und dem Eingangsrad (16) darstellt und

   c) das Gehäuse (10) mittels Lageraugen (14) an dem Achskörper schwenkbar angreift, daß eine durch die Lageraugen (14) verlaufende Schwenkachse gegenüber und in der Höhe der Drehachse des Rades (44) einen horizontalen Versatz aufweist und zum Erreichen eines positiven Nachlaufes geneigt verläuft.

2. Aufhängung nach Anspruch 1, wobei in dem Gehäuse (10) eine doppelte Untersetzungsstufe vorgesehen ist.

**Claims**

1. Suspension for a steerable and drivable wheel (44) on an axle body, in particular a wheel arranged on the front axle of an agricultural tractor, wherein

   a) the wheel (44) is accommodatably by a housing (10),

   b) for driving the wheel (44), a driving shaft (26), an input wheel (16) mounted eccentrically with respect to the axis of rotation of the wheel (44) and a through drive (43) are so arranged that the driving shaft (26) constitutes a direct driving connection likewise extending eccentrically with respect to the axis of rotation of the wheel (44) between the through drive (43) and the input wheel (16), and

   c) the housing (10) engages the axle body swivellably by means of bearing eyes (14) and a swivel axis extending through the bearing eyes (14) has a horizontal offset in relation to and level with the axis of rotation of the wheel (44) and extends inclined for achieving a positive castor action.

2. Suspension according to claim 1, wherein a double reduction stage is provided in the housing (10).

**Revendications**

1. Suspension pour une roue orientable (44) pouvant être entraînée, montée sur un corps d'essieu, notamment pour une roue montée sur un essieu avant d'un tracteur agricole, et dans laquelle

   a) la roue (44) est supportée, de façon à pouvoir tourner, par un carter (10),

   b) pour l'entraînement de la roue (44), un arbre d'entraînement (26), un pignon d'entrée (16) monté de façon excentrée par rapport à l'axe de rotation de la roue (44), et un système d'entraînement relais (43) sont disposés de telle sorte que l'arbre d'entraînement (26) représente une liaison motrice directe et également agissant de façon excentrée par rapport à l'axe de rotation de la roue (44), entre le système d'entraînement relais (43) et le pignon d'entrée (16), et

   c) le carter (10) est monté, au moyen d'oeillets de palier (14), de façon à pouvoir pivoter, sur le corps d'essieu, dont l'axe de pivotement passant par les oeillets de palier (14) présente un décalage horizontal par rapport à l'axe de rotation de la roue (44), à hauteur de cet axe, et est incliné pour l'obtention d'une chasse positive.

2. Suspension selon la revendication 1, dans laquelle un étage double de démultiplication est prévu dans le carter (10).

FIG. 1

FIG. 2